# EUROPEAN PATENT SPECIFICATION

(11) **EP 0 269 319 B1**
(45) Date of publication and mention of the grant of the patent: **26.01.1994**
(21) Application number: 87310002.8
(22) Date of filing: 12.11.1987
(51) Int. Cl.: C08G 73/10

(54) **Polyimide**
Polyimide
Polyimide

(30) Priority: 19.11.1986 JP 274206/86
(43) Date of publication of application: 01.06.1988
(73) Proprietor: MITSUI TOATSU CHEMICALS, Inc., Chiyoda-Ku Tokyo 100 (JP)
(72) Inventor: Oikawa, Hideaki, Yokohama-shi Kanagawa-ken (JP); Koga, Nobuhito, Yokohama-shi Kanagawa-ken (JP); Iiyama, Katsuaki, Odawara-shi Kanagawa-ken (JP); Kawashima, Saburo, Yokosuka-shi Kanagawa-ken (JP); Tamai, Shoji, Yokohama-shi Kanagawa-ken (JP); Ohta, Masahiro, Yokohama-shi Kanagawa-ken (JP); Yamaguchi, Akihiro, Kamakura-shi Kanagawa-ken (JP)
(74) Representative: Hayward, Denis Edward Peter

(56) References cited:
- WO-A-84/04313
- US-A- 3 833 546
- CHEMICAL ABSTRACTS, vol. 100, no. 14, 2nd April 1984, page 58, abstract no. 104703f, Columbus, Ohio, US; & JP-A-58 157 190
- CHEMICAL ABSTRACTS, vol. 102, no. 1, 8th July 1985, page 657, abstract no. 88541k, Columbus, Ohio, US; & JP-A-59 76 451

## Description

The present invention relates to a novel polyimide and more particularly to a polyimide which is almost colorless, capable of being extrusion or injection molded and is furthermore excellent as a high-temperature adhesive.

Conventional polyimides obtained by the reaction of tetracarboxylic dianhydride with diamine have excellent electrical and mechanical properties in addition to good high-temperature stability. Therefore, polyimides have been used in many fields such as electrical and electronic components, space and aeronautics materials and automotive parts and are currently expected to be applied to wider fields.

However, the polyimides which have so far been developed are generally low in light transmittance and mostly yellow or brown colored, although many of the polyimides exhibit excellent properties.

A polyetherimide having the formula (II) (Modern Plastics, page 38, (1982)) has been proposed as a polyimide having a high total light transmittance. 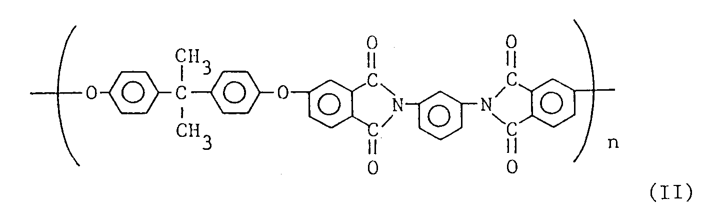
A film of this polyetherimide is almost colorless and gives 35% transmittance of a light beam having a wave length of 400 nm at a thickness of 50 micrometers.

However, to be useful in the covering pad of solar cells for recent space development programs, polyimide is required to have not only a high transmittance for total light, particularly a high transmittance in the wave length region of 400 nm which is important in outer space, but also excellent processability.

Conventional polyimide has poor processability while, on the other hand, special polyimide having good processability is inferior in high-temperature stability and solvent resistance. Thus the performance of polyimide has both merits and drawbacks.

For example, the polyimide having recurring units of the formula (III): 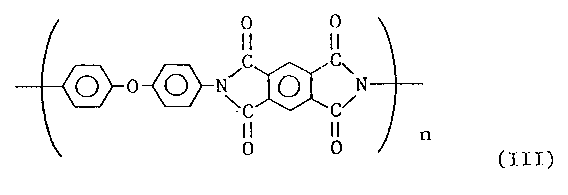
is known to have high-temperature stability (for example, Kogyo Zairyo, 27, 98 (1979)). This polyimide, however, has no distinct glass transition temperature and can only be molded by special means such as sintering.

An object of this invention is to provide a polyimide which is high in total light transmittance, giving the possibility of using it in aerospace applications, and easy to process, in addition to possessing excellent stability at high temperatures, and furthermore capable of being used as a high-temperature adhesive.

The present inventors have extensively investigated in order to achieve the above-mentioned object and have discovered a novel polyimide possessing the required attributes.

Accordingly, the present invention provides a polyimide having recurring units of the formula (I): 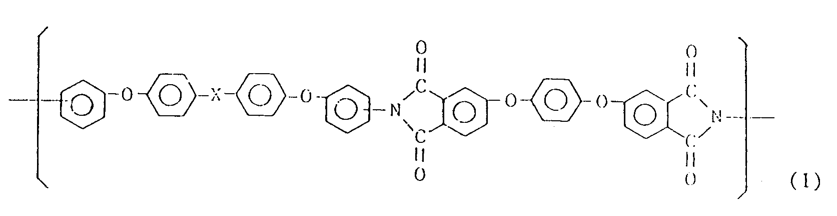
wherein X is a direct bond, a divalent hydrocarbon radical having 1 to 10 carbons, a hexafluorinated isopropylidene radical, a carbonyl radical, a sulfonyl radical or a thio radical, and the nitrogen atoms of the imide rings are located either both at the meta-position or both at the para-position to the respective ether linkage.

This polyimide can be used in a broad range of applications, such as to fabricate molded articles for precision instruments, electrical and electronic components, sliding members etc., for films such as adhesive films, flexible circuit substrate films, transparent covering films etc., and for adhesive varnishes, wire covering varnishes, structural adhesives and matrix resin for composites.

The technology of the invention will now be described in more detail, with reference to the accompanying drawings in which:-
Figure 1 shows examples of absorption spectra of polyimides according to this invention in the visible and ultra violet regions.
Figure 2 shows an example of the IR absorption spectrum of a polyimide powder according to this invention.

The polyimide of this invention having recurring units of formula (I) can be prepared by reacting 4,4'-(p-phenylenedioxy)dipthalic dianhydride having the formula (IV): 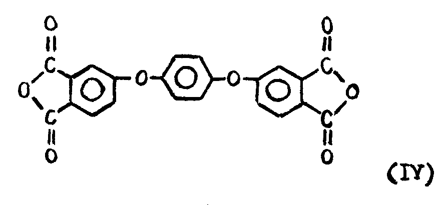
as the tetracarboxylic dianhydride, with an ether diamine having the formula (V): 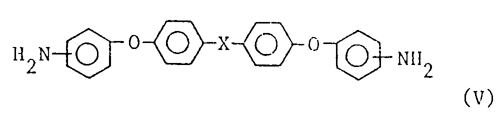
wherein X is the same as above, and the amino radicals are located either both at the meta- or both at the para-position to the respective ether linkage, and carrying out dehydration and ring closure of the resulting polyamic acid having recurring units of the formula (VI): 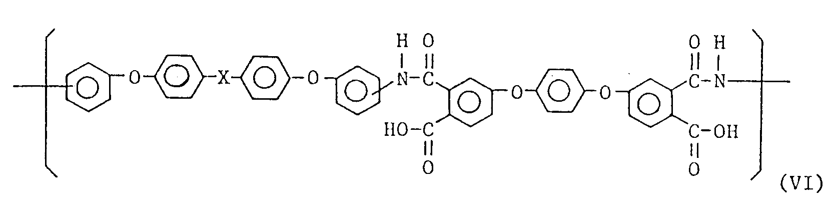
wherein X is the same as above, and the amide nitrogens are located either both at the meta- or both at the para-position to the respective ether linkage.

The etherdiamines which may be used include, for example,
bis[4-(3-aminophenoxy)phenyl]methane,
bis[4-(4-aminophenoxy)phenyl]methane,
1,1-bis[4-(3-aminophenoxy)phenyl]ethane,
1,1-bis[4-(4-aminophenoxy)phenyl]ethane,
1,2-bis[4-(3-aminophenoxy)phenyl]ethane,
1,2-bis[4-(4-aminophenoxy)phenyl]ethane,
2,2-bis[4-(3-aminophenoxy)phenyl]propane,
2,2-bis[4-(4-aminophenoxy)phenyl]propane,
2,2-bis[4-(3-aminophenoxy)phenyl]butane,
2,2-bis[4-(4-aminophenoxy)phenyl]butane,
2,2-bis[4-(3-aminophenoxy)phenyl]-1,1,1,3,3,3-hexafluoropropane,
2,2-bis[4(4-aminophenoxy)phenyl]-1,1,1,3,3,3-hexafluoropropane,
4,4ʹ-bis(3-aminophenoxy)biphenyl, 4,4ʹ-bis(4-aminophenoxy)biphenyl,
bis[4-(3-aminophenoxy)phenyl] ketone,
bis[4-(4-aminophenoxy)phenyl] ketone,
bis[4-(3-aminophenoxy)phenyl] sulfide,
bis[4-(4-aminophenoxy)phenyl] sulfide,
bis[4-(3-aminophenoxy)phenyl] sulfone and
bis[4-(4-aminophenoxy)phenyl] sulfone.
The ether diamine is used singly or in a combination of two or more.

In order to obtain the polyimide, the ether diamine is reacted in an organic solvent with the 4,4ʹ-(p-phenylenedioxy)diphthalic dianhydride according to the usual method.

The organic solvents that can be used in this reaction include, for example, N,N-dimethylformamide, N,N-dimethylacetamide, N,N-diethylacetamide, N,N-dimethylmethoxyacetamide, N-methyl-2-pyrrolidone, 1,3-dimethyl-2-imidazolidinone, N-methylcaprolactam, 1,2-dimethoxyethane, bis(2-methoxyethyl) ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethylsulfoxide, dimethylsulfone, tetramethylurea and hexamethylphosphoramide. The organic solvent is used alone or in a combination of two or more.

The reaction temperature is normally 60°C or less, and preferably 50°C or less.

The reaction can be carried out under any pressure and ambient pressure is satisfactory.

The reaction time depends upon the kind of ether diamine and solvent used as well as the reaction temperature. The reaction is usually continued for sufficient time to complete the formation of polyamic acid and a reaction time of 4 - 24 hours is normally enough.

The polyamic acid having recurring units of the aforesaid formula (VI) can thus be obtained.

In the next step, the resulting polyamic acid is thermally imidized by heating to 150 - 400°C, or chemically imidized by employing a common imidizing agent, or imidized by simultaneously using these thermal and chemical methods to obtain the polyimide of this invention having recurring units of the formula (I).

The polyimide of this invention is flowable at high temperatures while maintaining the same high-temperature stability as conventional polyimides. The polyimide of this invention is also excellent in processing ability and shows a slight reduction of adhesive strength at high temperatures.

In addition, the optical characteristics of film prepared from the polyimide of this invention include a high total light transmittance, the film being almost colorless, and furthermore high transmittance of a light beam having a wave length of 400 nm, which is required in aerospace applications.

A polyimide film can be prepared from the polyamic acid precursor or from the polyimide itself.

The film forming methods which may be used include general methods such as casting and melt extrusion.

For example, the organic solvent solution of polamic acid can be cast on a metal or glass plate using a doctor knife or coater etc. The coated plate is then heated to carry out imidization. The film is obtained by stripping from the plate.

As an alternative, the organic solvent solution can have added to it an imidizing agent such as acetic anhydride and then be immediately cast on a glass plate. The coated plate is heated to evaporate the residual solvent and the imidizing agent. The film thus obtained is stripped from the plate.

When the polyimide is soluble in an organic solvent, the polyimide in solution can be cast and the solvent removed by heating to obtain a film.

The polyimide can be used as an adhesive by the following methods.

The polyamic acid is dehydrated thermally or chemically to prepare, for example, a film or powder of polyimide. The film or powder is inserted between substrates, pressed at a temperature of 50 - 400°C under a pressure of 1 - 1,000 kg/cm² and cured at 100 - 400°C to obtain strongly adhered substrates.

In another method, a solution obtained by dissolving the polyamic acid in an organic solvent, or the reaction mixture in which the polyamic acid has been formed in an organic solvent, is used to adhere the substrates. The substrates are coated with the polyamic acid solution and preheated in air at about 220°C for the required time to remove excess solvent. The polyamic acid film thus formed on the substrate surface is next converted to a polyimide film. The polyimide films on the substrate surfaces are then placed together and pressed at a temperature of 50 - 400°C under a pressure of 1 - 1,000 kg/cm², followed by curing at 100 - 400°C. This method is suitable for obtaining strong adhesion of the substrates.

### EXAMPLES

The present invention will now be further illustrated by means of Examples and a Comparative Example.

### Example 1

A reaction vessel fitted with a stirrer, reflux condenser and nitrogen inlet tube was charged with 14.737 g (0.04 mol) of 4,4ʹ-bis(3-aminophenoxy)biphenyl and 121.3 g of N,N-dimethylacetamide. The mixture had added to it at room temperature under a nitrogen atmosphere 15.610 g (0.0388 mol) of 4,4ʹ-(p-phenylenedioxy)diphthalic dianhydride portion by portion with care taken to avoid temperature rise of the solution. The reaction mixture was stirred for 24 hours at room temperature. The polyamic acid thus obtained had an inherent viscosity of 1.25 dl/g. (The inherent viscosity was measured at 35°C in a solution containing 0.5 g of polyamic acid in 100 ml of N,N-dimethylacetamide.)

A part of the above polyamic acid solution was cast on a glass plate and heated for an hour each at 100°C, 200°C and 300°C to obtain a colorless and transparent polyimide film having a thickness of 50 micrometers. The polyimide film had a tensile strength of 12.3 kg/mm² and an elongation of 10% according to ASTM D-882. The film also had a glass transition temperatue of 203°C in accordance with the TMA penetration method, a 5% weight decrease temperature in air of 527°C according to DTA-TG, a total light transmittance of 90.7% and a haze of 0.2% on the basis of ASTM D-1003, and a transmittance of 62% for light having a wave length of 400 nm.

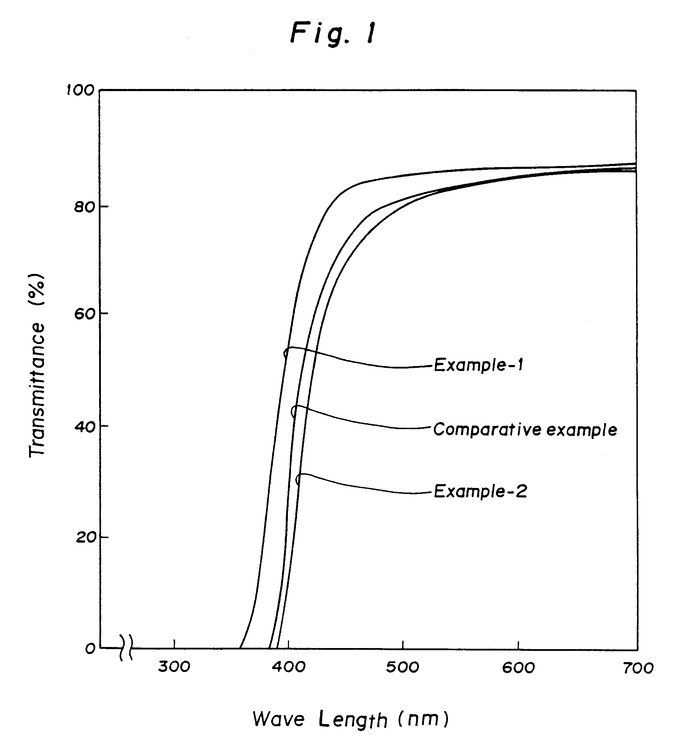

Figure 1 shows the absorption spectrum of the film in the visible and ultra-violet regions.

### Comparative Example

A film of polyetherimide having the above formula (II) (Ultem TM; Trade mark of General Electric Co.) was measured to determine its properties. The total light transmittance and haze are given in Table 1. The absorption spectrum in the visible and ultra violet regions is shown in Figure 1. In the table and the figure the results for the polyimide film of Example 1 are shown also in comparison.

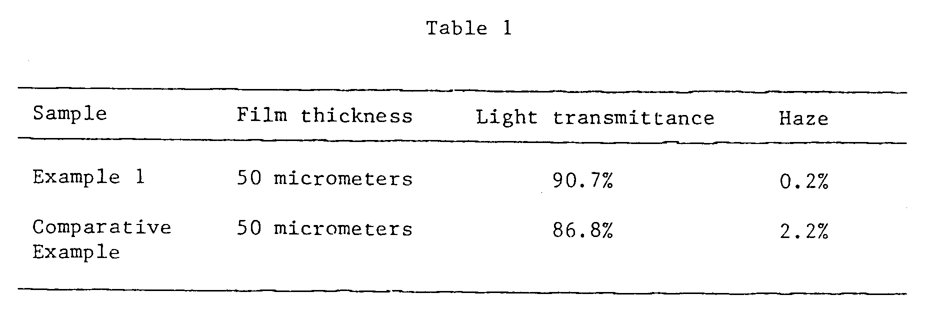

### Example 2

The same procedures as in Example 1 were carried out except 14.737 g (0.04 mol) of 4,4ʹ-bis(4-aminophenoxy)biphenyl was used in place of 14.737 g (0.04 mol) of 4,4ʹ-bis(3-aminophenoxy)biphenyl. The polyamic acid thus obtained had an inherent viscosity of 1.80 dl/g.

A part of the polyamic acid solution was subjected to the same procedures as in Example 1 to obtain a light yellow polyimide film having a thickness of 50 micrometers. The film had a tensile strength of 13.0 kg/mm², an elongation of 18%, a glass transition temperature of 230°C and a 5% weight decrease temperature of 535°C. The polyimide film also had a total light transmittance of 85.5% and a haze of 1.1%.

The absorption spectrum of the polyimide film in the visible and ultra violet regions is illustrated in Figure 1 together with the results of Example 1.

### Example 3

A reaction vessel fitted with a stirrer, reflux condenser and nitrogen inlet tube was charged with 15.857 g (0.04 mol) of bis[4-(3-aminophenoxy)phenyl] ketone and 125.8 g of N,N-dimethylacetamide. The mixture had added to it at room temperature under a nitrogen atmosphere 15.610 g (0.0388 mol) of 4,4ʹ-(p-phenylenedioxy)diphthalic dianhydride portion by portion with care taken to prevent temperature rise of the solution. After stirring for 24 hours at room temperature, the resulting polyamic acid had an inherent viscosity of 0.82 dl/g.

A part of the above obtained polyamic acid solution was subjected to the same procedures as in Example 1 to obtain a light yellow or colorless polyimide film having a thickness of 50 micrometers. The polyimide film had a tensile strength of 13.5 kg/mm², an elongation of 10%, a glass transition temperature of 191°C and a 5% weight decrease temperature of 524°C.

To 78.63 g of polyamic acid solution thus obtained, 78.6 g of N,N-dimethylacetamide was added, stirred for an hour under a nitrogen atmosphere and then 12.2 g (0.12 mol) of acetic anhydride and 8.08 g (0.08 mol) of triethylamine were added dropwise at room temperature. After stirring for 24 hours at this temperature, the reaction mixture was poured into 500 g of water. The separated product was filtered, washed with methanol and dried at 180°C for 24 hours under reduced pressure to obtain 14.70 g of yellow powder (98.0% yield).

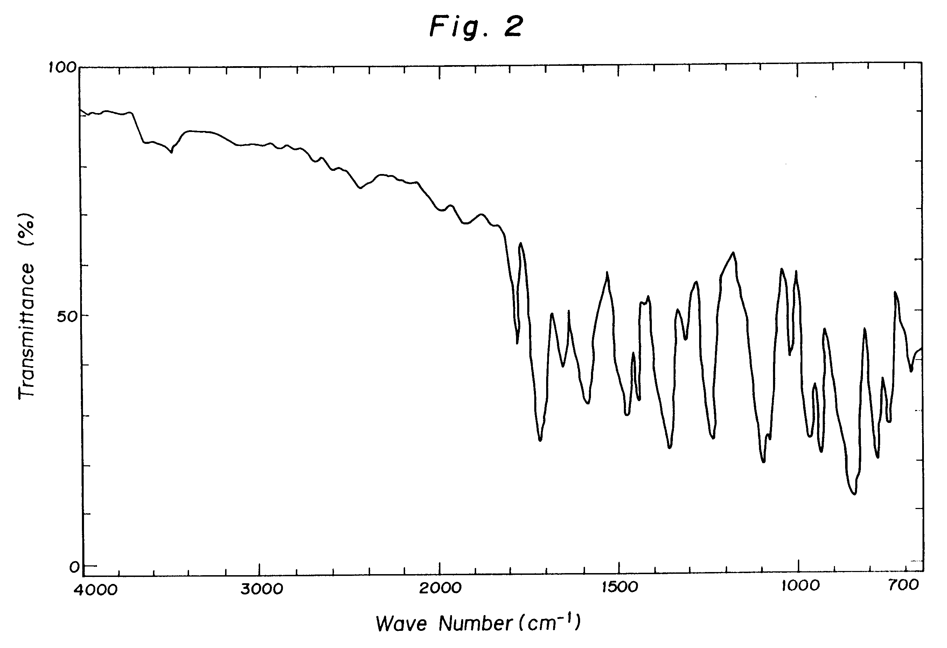

Figure 2 illustrates the IR absorption spectrum of the resulting polyimide powder. The spectrum shows the remarkable characteristic absorption of imide at 1780 cm⁻¹ and 1720 cm⁻¹, and of the ether linkage at 1240 cm⁻¹.

The polyimide powder thus obtained exhibited excellent high-temperature stability and had a glass transition temperature of 190°C according to the DSC method and a 5% weight decrease temperature of 520°C.

The melt viscosity of the resulting polyimide powder was measured with a flow tester (CFT-500, a product from Shimadzu Manufacturing Co.). The nozzle employed had a diameter of 0.1 cm and a length of 1 cm. The load applied was 100 kg. The powder exhibited a good flow property of 1.5 x 10⁴ poises at 320°C, 8.3 x 10³ poises at 340°C, 3.5 x 10³ poises at 360°C and 1.1 x 10³ poises at 380°C. The polyimide powder was thus found to be capable of being injection molded.

In addition, the strands obtained at each extrusion temperature had no difference in color and were yellow, transparent and very flexible.

### Example 4

The same procedures as in Example 3 was carried out except 15.857 g (0.04 mol) of [4-(4-aminophenoxy)phenyl] ketone was used in place of 15.857 g (0.04 mol) of [4-(3-aminophenoxy)phenyl] ketone. The resulting polyamic acid had an inherent viscosity of 0.92 dl/g. A part of the polyamic acid solution thus obtained was subjected to the same procedures using a glass plate as in Example 1 to obtain a light yellow polyimide film having a thickness of 50 micrometers. The polyimide film had a tensile strength of 14.2 kg/mm², an elongation of 13%, a glass transition temperature of 215°C, a 5% weight decrease temperature of 526°C and a melting point of 367°C according to the DSC method.

To 78.63 g of the polyamic acid solution thus obtained, 78.6 g of N,N-dimethylacetamide was added as in Example 3. The mixture was chemically imidized by using 12.2 g (0.12 mol) of acetic anhydride and 8.08 g (0.08 mol) of triethylamine to obtain 14.6 g of yellow powder (97% yield). The resulting polyimide powder had a glass transition temperature of 213°C according to the DSC method, a 5% weight decrease temperature of 523°C and a melting point of 359°C in accordance with the DSC method. The powder was a crystalline polyimide and had a crystallinity of 27% according to X-ray diffraction.

The melt viscosity of the resulting polyimide was measured by the same procedures as in Example 3 except the measuring temperatures were changed. The sample exhibited no flow at 340°C and 360°C. The melt viscosity was 1.6 x 10⁵ poises at 380°C, 1.0 x 10⁴ poises at 400°C, 5.3 x 10³ poises at 420°C and 4.7 x 10³ poises at 440°C. These values exhibited the specific flow property of crystalline high polymers. In addition, the strands obtained at each extrusion temperature had no difference in color and were light yellow, transparent and very elastic.

### Example 5

Polyamic acid solution was obtained by the same procedures as in Example 1 except 16.000 g (0.04 mol) of bis[4-(3-aminophenoxy)phenyl] sulfide were used in place of 14.737 g (0.04 mol) of 4,4ʹ-bis(3-aminophenoxy)biphenyl and the amount of N,N-dimethylacetamide was changed from 121.3 g to 126.4 g. The resulting polyamic acid had an inherent viscosity of 1.46 dl/g.

A part of the polyamic acid solution was subjected to the same procedures as in Example 1 to obtain a light yellow polyimide film having a thickness of 50 micrometers. The film had a tensile strength of 11.3 kg/mm², an elongation of 9.2%, a glass transition temperature of 192°C and a 5% weight decrease temperature of 529°C.

The polyamic acid solution obtained was applied on a cold rolled steel panel (JIS G-3141, spec/SD, 25 x 100 x 1.6 mm) which had previously been washed with trichloroethylene and dried for an hour each at 100°C and 220°C. The coated steel plate thus obtained was overlapped with another cold rolled steel panel and pressed at 350°C for 5 minutes under a pressure of 50 kg/cm². The thickness of coated adhesive was 35 micrometers.

The bonded specimen had a lap shear strength of 375 kg/cm² at room temperature and 200 kg/cm² at 240°C in accordance with JIS K-6848 and K-6850.

The above polyimide film was inserted between cold rolled steel panels which has been preheated to 150°C and was pressed at 350°C for 5 minutes under a pressure of 50 kg/cm². The bonded specimen had a lap shear strength of 363 kg/cm² at room temperature and 210 kg/cm² at 240°C.

In addition, the polyamic acid solution was cast on a electroytic copper foil and heated for an hour each at 100°C, 200°C and 300°C to obtain a copper clad flexible circuit substrate. The resulting circuit substrate had a copper foil peel strength of 2.3 kg/cm² according to the 90° peel strength test. After immersing the substrate in a solder bath at 300°C for 60 seconds, no blistering or flaking was found at all.

### Example 6

The same procedures as in Example 5 were carried out except bis[4-(4-aminophenoxy)phenyl] sulfide was used in place of bis[4-(3-aminophenoxy)phenyl] sulfide. The resulting polyamic acid solution was treated according to the same procedures as in Example 5 to obtain a light yellow polyimide film having a thickness of 50 micrometers.

The polyamic acid thus obtained had an inherent viscosity of 1.22 dl/g, and the resulting polyimide film had a tensile strength of 11.0 kg/mm², an elongation of 9.0%, a glass transition temperature of 204°C, a 5% weight decrease temperature of 525°C, a melting point of 346°C according to DSC and a crystallinity of 31% in accordance with X-ray diffraction.

Using the polyamic acid solution, the adhesive strength between cold rolled steel panels was measured by the same procedures as in Example 5. The bonded specimen had a lap shear strength of 352 kg/cm² at room temperature and 198 kg/cm² at 240°C.

The polyimide film was inserted between cold rolled steel panels which had been preheated to 150°C as in Example 5 and then pressed at 370°C for 5 minutes under a pressure of 50 kg/cm². The bonded specimen had a lap shear strength of 350 kg/cm² at room temperature and 205 kg/cm² at 240°C.

In addition, a flexible copper clad circuit substrate was obtained by using a electrolytic copper foil as in Example 5. The circuit substrate had a copper foil peel strength of 2.0 kg/cm² according to the 90° peel strength test. Afte immersing the substrate in a solder bath at 300°C for 60 seconds, no change in the shape was found at all.

### Examples 7 - 11

The same procedures as in Example 1 were carried out except various ether diamines set out in Table 2 were used in place of 14.737 g (0.04 mol) of 4,4ʹ-bis(3-aminophenoxy)biphenyl to obtain polyamic acid solutions and polyimide films having a thickness of 50 micrometers as in Example 1.

The inherent viscosities of the resulting polyamic acids and the thermal and mechanical properties of the polyimide films thus obtained are given in Table 2.

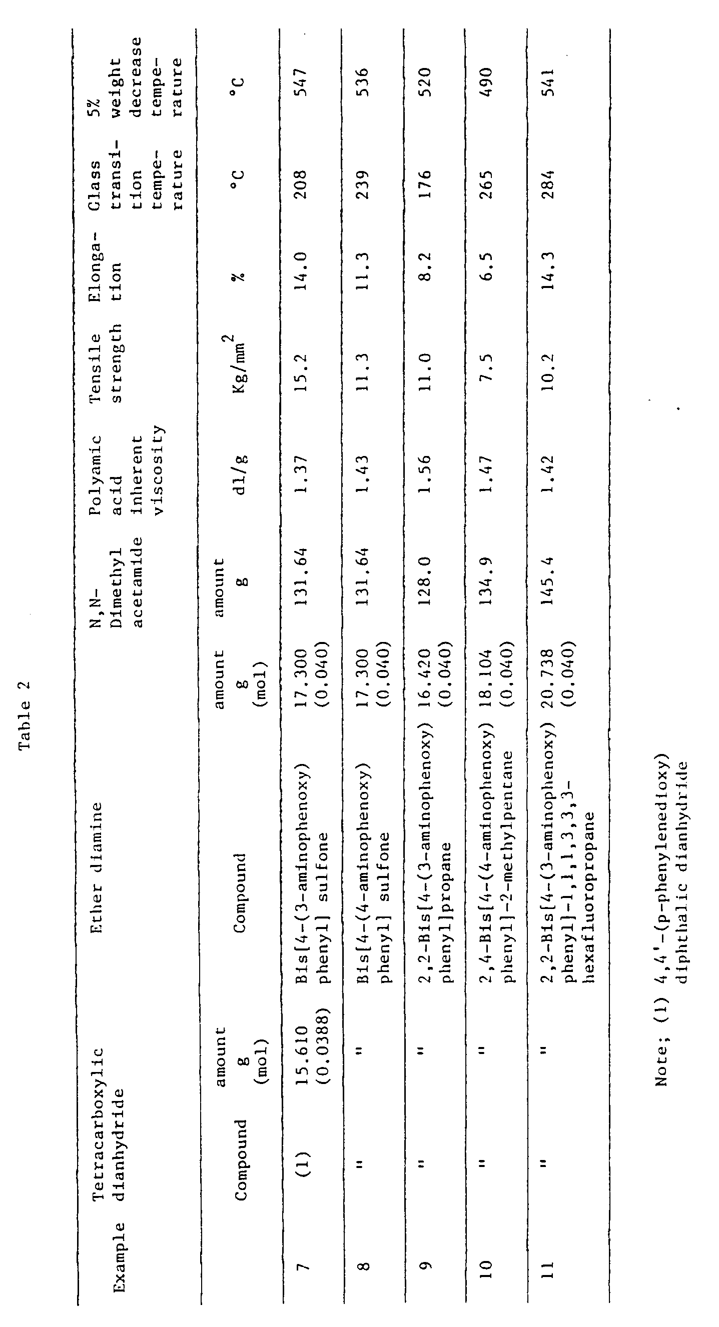

## Claims

1. A polyimide having recurring units of the formula (I): 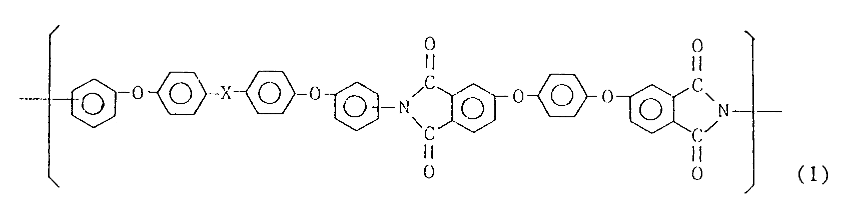 wherein X is a direct bond, a divalent hydrocarbon radical having 1 to 10 carbons, a hexafluorinated isopropylidene radical, a carbonyl radical, a sulfonyl radical or a thio radical, and the nitrogen atoms of the imide rings are located either both at the meta-position or both at the para-position to the respective ether linkage.

2. A polyimide as claimed in claim 1, wherein X is a direct bond and the nitrogen atoms of the imide rings are located both at the meta-position to the respective ether linkage.

3. A polyimide as claimed in claim 1, wherein X is a direct bond and the nitrogen atoms of the imide rings are located both at the para-position to the respective ether linkage.

4. A polyimide as claimed in claim 1, wherein X is a hexafluorinated isopropylidene radical and the nitrogen atoms of the imide rings are located both at the meta-position to the respective ether linkage.

5. A polyimide as claimed in claim 1, wherein X is a hexafluorinated isopropylidene radical and the nitrogen atoms of the imide rings are located both at the para-position to the respective ether linkage.

6. A polyimide as claimed in claim 1, wherein X is a carbonyl radical and the nitrogen atoms of the imide rings are located both at the meta-position to the respective ether linkage.

7. A polyimide as claimed in claim 1, wherein X is a carbonyl radical and the nitrogen atoms of the imide rings are located both at the para-position to the respective ether linkage.

8. A polyimide as claimed in claim 1, wherein X is a sulfonyl radical and the nitrogen atoms of the imide rings are located both at the meta-position to the respective ether linkage.

9. A polyimide as claimed in claim 1, wherein X is a sulfonyl radical and the nitrogen atoms of the imide rings are located both at the para-position to the respective ether linkage.

10. A polyimide as claimed in claim 1, wherein X is a thio radical and the nitrogen atoms of the imide rings are located both at the meta-position to the respective ether linkage.

11. A polyimide as claimed in claim 1, wherein X is a thio radical and the nitrogen atoms of the imide rings are located both at the para-position to the respective ether linkage.

## Patentansprüche

1. Ein Polyimid mit rekurrenten Einheiten der Formel (I): 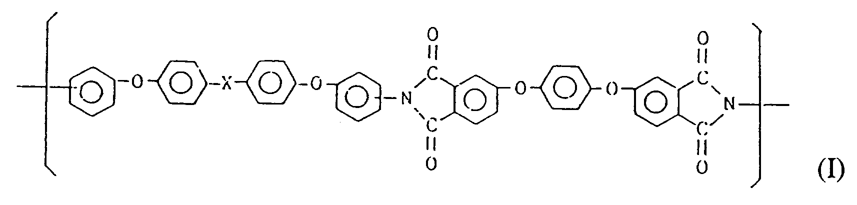 worin X eine direkte Bindung, ein zweiwertiges Kohlenwasserstoffradikal mit 1 bis 10 Kohlenstoffen, ein hexafluoriertes Isopropylidenradikal, ein Sulfonylradikal oder ein Thioradikal ist und die Stickstoffatome der Imid-Ringe entweder beide in Meta-Stellung oder beide in Para-Stellung zur jeweiligen Etherbindung untergebracht sind.

2. Ein Polyimid, wie es in Anspruch 1 geltend gemacht wird, worin X eine direkte Bindung ist und die Stickstoffatome der Imid-Ringe beide in Meta-Stellung zur jeweiligen Etherbindung untergebracht sind.

3. Ein Polyimid, wie es in Anspruch 1 geltend gemacht wird, worin X eine direkte Bindung ist und die Stickstoffatome der Imid-Ringe beide in Para-Stellung zur jeweiligen Etherbindung untergebracht sind.

4. Ein Polyimid, wie es in Anspruch 1 geltend gemacht wird, worin X ein hexafluoriertes Isopropylidenradikal ist und die Stickstoffatome der Imid-Ringe beide in Meta-Stellung zur jeweiligen Etherbindung untergebracht sind.

5. Ein Polyimid, wie es in Anspruch 1 geltend gemacht wird, worin X ein hexafluoriertes Isopropylidenradikal ist und die Stickstoffatome der Imid-Ringe beide in Para-Stellung zur jeweiligen Etherbindung untergebracht sind.

6. Ein Polyimid, wie es in Anspruch 1 geltend gemacht wird, worin X ein Carbonylradikal ist und die Stickstoffatome der Imid-Ringe beide in Meta-Stellung zur jeweiligen Etherbindung untergebracht sind.

7. Ein Polyimid, wie es in Anspruch 1 geltend gemacht wird, worin X ein Carbonylradikal ist und die Stickstoffatome der Imid-Ringe beide in Para-Stellung zur jeweiligen Etherbindung untergebracht sind.

8. Ein Polyimid, wie es in Anspruch 1 geltend gemacht wird, worin X ein Sulfonylradikal ist und die Stickstoffatome der Imid-Ringe beide in Meta-Stellung zur jeweiligen Etherbindung untergebracht sind.

9. Ein Polyimid, wie es in Anspruch 1 geltend gemacht wird, worin X ein Sulfonylradikal ist und die Stickstoffatome der Imid-Ringe beide in Para-Stellung zur jeweiligen Etherbindung untergebracht sind.

10. Ein Polyimid, wie es in Anspruch 1 geltend gemacht wird, worin X ein Thioradikal ist und die Stickstoffatome der Imid-Ringe beide in Meta-Stellung zur jeweiligen Etherbindung untergebracht sind.

11. Ein Polyimid, wie es in Anspruch 1 geltend gemacht wird, worin X ein Thioradikal ist und die Stickstoffatome der Imid-Ringe beide in Para-Stellung zur jeweiligen Etherbindung untergebracht sind.

## Revendications

1. Un polyimide présentant les unités récurantes de la formule (I) : 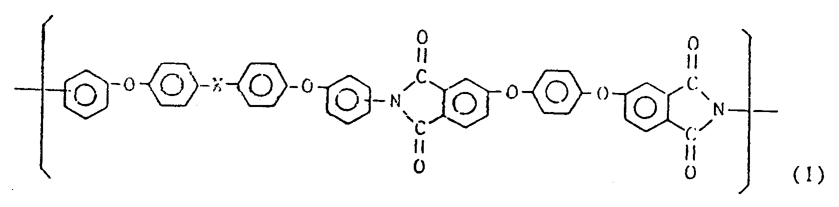 dans lequel X est une liaison directe, un radical hydrocarboné divalent comportant de 1 à 10 atomes de carbone, un radical isopropylidène hexafluoré, un radical carbonyl, un radical sulfonyl ou un radical thio, et les atomes d'azote des anneaux imide sont situés soit tous les deux en position méta soit tous les deux en position para de la liaison éther respective.

2. Un polyimide selon la revendication 1, dans lequel X est une liaison directe et les atomes d'azote des anneaux imide sont tous les deux situés en position méta de la liaison éther respective.

3. Un polyimide selon la revendication 1, dans lequel X est une liaison directe et les atomes d'azote des anneaux imide sont tous les deux situés en position para de la liaison éther respective.

4. Un polyimide selon la revendication 1, dans lequel X est un radical isopropylidène hexafluoré et les atomes d'azote des anneaux imide sont tous les deux situés en position méta de la liaison éther respective.

5. Un polyimide selon la revendication 1, dans lequel X est un radical isopropylidène hexafluoré et les atomes d'azote des anneaux imide sont tous les deux situés en position para de la liaison éther respective.

6. Un polyimide selon la revendication 1, dans lequel X est un radical carbonyl et les atomes d'azote des anneaux imide sont tous les deux situés en position méta de la liaison éther respective.

7. Un polyimide selon la revendication 1, dans lequel X est un radical carbonyl et les atomes d'azote des anneaux imide sont tous les deux situés en position para de la liaison éther respective.

8. Un polyimide selon la revendication 1, dans lequel X est un radical sulfonyl et les atomes d'azote des anneaux imide sont tous les deux situés en position méta de la liaison éther respective.

9. Un polyimide selon la revendication 1, dans lequel X est un radical sulfonyl et les atomes d'azote des anneaux imide sont tous les deux situés en position para de la liaison éther respective.

10. Un polyimide selon la revendication 1, dans lequel X est radical thio et les atomes d'azote des anneaux imide sont tous les deux situés en position méta de la liaison éther respective.

11. Un polyimide selon la revendication 1, dans lequel X est un radical thio et les atomes d'azote des anneaux imide sont tous les deux situés en position para de la liaison éther respective.
